# FASCICULE DE BREVET EUROPEEN

(11) **EP 0 447 979 B1**
(45) Date de publication et mention de la délivrance du brevet: **14.09.1994**
(21) Numéro de dépôt: 91104026.9
(22) Date de dépôt: 15.03.1991
(51) Int. Cl.: H05B 6/68, F24C 7/02

(54) **Procédé de cuisson pour un four à chauffage combiné par micro-ondes, convection et gril**
Verfahren zum Backen für einen Ofen mit Mikrowellen-, Konvektions- und Infrarotheizung
Baking method for an oven with microwave-, hot air and infrared heating

(30) Priorité: 22.03.1990 FR 9003655
(43) Date de publication de la demande: 25.09.1991
(73) Titulaire: MOULINEX, F-93170 Bagnolet (FR)
(72) Inventeur: Chartrain, Pierre, Moulinex, F-14123 Cormeilles-le-Royal (FR); Gensbittel, Olivier Henri Jean-Louis, Moulinex, F-14123 Cormeilles-le-Royal (FR); Launay, Gérard Roger Georges, Moulinex, F-14123 Cormeilles-le-Royal (FR)
(74) Mandataire: May, Hans Ulrich, Dr.

(56) Documents cités:
- EP-A- 0 358 344
- FR-A- 2 606 578
- GB-A- 2 022 340
- GB-A- 2 022 341
- US-A- 4 556 771

## Description

L'invention concerne un procédé de cuisson pour un four à chauffage combiné par convection, gril et micro-ondes, comportant une enceinte de cuisson et un dispositif de commande alimentant, à partir d'une source d'énergie électrique de puissance nominale limitée, une résistance de convection, une résistance de gril et un magnétron pendant deux phases de cuisson, soit une phase de montée en température au cours de laquelle la température de l'enceinte monte jusqu'à une température de consigne affichée par l'usager, puis une phase de régulation au cours de laquelle la température de l'enceinte est régulée par rapport à ladite température de consigne au moyen d'un dispositif thermostatique, la somme des puissances absorbées respectivement par les deux résistances et l'énergie micro-ondes étant inférieure à la puissance nominale de la source d'énergie. Un tel procédé est décrit par exemple dans FR-A-2606 578.

Dans les fours de ce type, la phase de montée en température est relativement longue. En effet, pendant cette phase, seule la résistance de convection est alimentée, le gril n'étant pas utilisé par souci de ne pas brûler la surface de l'aliment à cuire (formation d'une "croûte") et l'énergie micro-ondes n'étant appliquée que pendant la phase de régulation.

L'invention a pour but de remédier à cet inconvénient et en particulier de réduire considérablement la phase de montée en température de ce type de four.

Selon l'invention, pendant la phase de montée en température, le dispositif de commande alimente la résistance de convection en continu à pleine puissance et la résistance de gril selon un cycle marche-arrêt dont la période est prédéterminée, tandis que l'énergie micro-ondes est appliquée périodiquement pendant chaque temps d'arrêt de la résistance de gril pour une durée d'application telle que, pour un temps de consigne préalablement affiché par l'usager, ladite durée est égale au temps le plus court des deux temps, soit de consigne, soit d'arrêt de la résistance de gril.

Ainsi, pendant la phase de montée en température, la résistance de convection chauffe en continu tandis que la résistance de gril chauffe séquentiellement, augmentant ainsi rapidement la température de l'enceinte et ne grillant pas trop la surface de l'aliment à cuire. L'énergie micro-ondes étant appliquée pendant les temps d'arrêt du gril, la puissance nominale de la source n'est pas dépassée et l'aliment commence à chauffer par l'intérieur, ce qui équilibre sa température interne avec sa température de surface, et empêche donc la formation d'une "croûte". La phase de montée en température est donc considérablement réduite tout en gardant une bonne qualité de cuisson.

Les caractéristiques et avantages de l'invention ressortiront d'ailleurs de la description qui va suivre, à titre d'exemple, en référence au dessin annexé dans lequel :

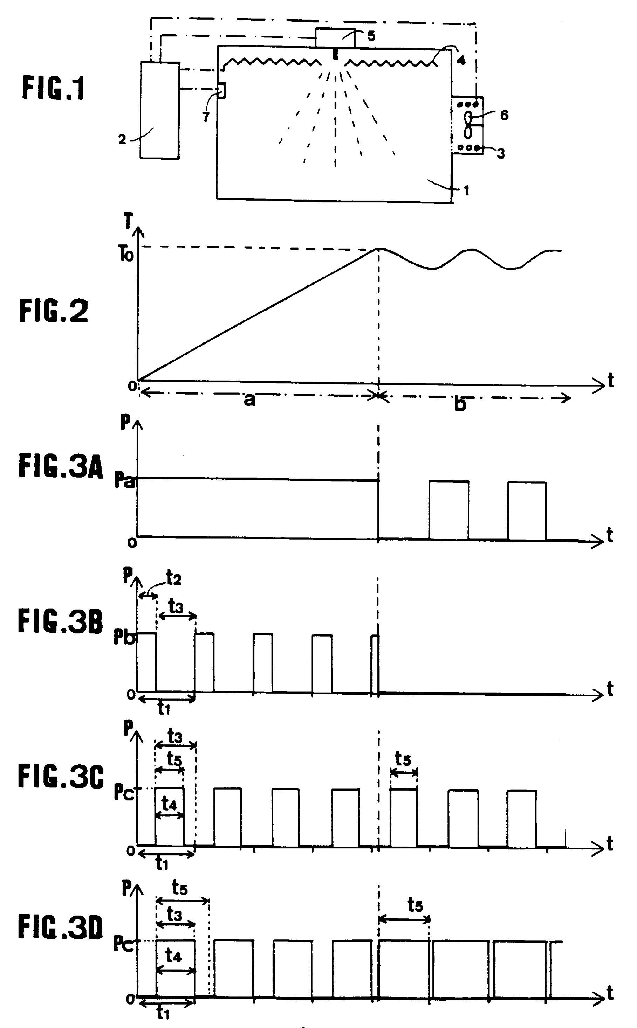

la figure 1 est une vue schématique d'un four selon l'invention ; la figure 2 est une représentation graphique illustrant la courbe de la température de l'enceinte pendant les deux phases de cuisson ; les figures 3A, 3B, 3C, 3D sont des représentations graphiques illustrant les séquences d'applications respectives de la résistance de convection, de la résistance de gril, de l'énergie micro-ondes pour un temps de consigne équivalent à 45% et de l'énergie à micro-ondes pour un temps de consigne équivalent à 90%.

Le four de cuisson à chauffage combiné par convection, gril et micro-ondes, représenté sur la figure 1, comporte une enceinte de cuisson 1 et un dispositif électronique de commande 2, connu en soi, alimentant, à partir d'une source d'énergie électrique (non représentée), une résistance de convection 3, une résistance de gril 4 et un magnétron 5.

La convection peut être, soit naturelle, la résistance de convection étant alors une résistance de sole (non représentée), soit forcée, la résistance de convection 3 entourant un ventilateur 6 destiné à souffler de l'air chaud à l'intérieur de l'enceinte 1.

La source d'énergie a une puissance nominale limitée (limite de 16 Ampères pour une tension de 220 volts correspondant à une puissance nominale de 3 520 Watts). La somme des puissances Pa, Pb, Pc absorbées au niveau de la source respectivement par les deux résistances 3,4 et l'énergie micro-ondes fournie par le magnétron 5 doit être inférieure à la puissance nominale de la source d'énergie. Les puissances maximales Pa, Pb, Pc absorbées au niveau de la source par l'énergie micro-ondes, la résistance de convection 3 et la résistance de gril 4 sont choisies respectivement aux environs de 1400, 1400 et 1500 Watts.

Comme on le voit sur la figure 2 qui représente une courbe de la température T de l'enceinte 1 en fonction du temps t, les deux résistances 3,4 et le magnétron 5 sont alimentés par le dispositif de commande 2 pendant deux phases de cuisson a,b, soit une phase de montée en température a au cours de laquelle la température T de l'enceinte 1 monte jusqu'à une température de consigne T0 affichée par l'usager, puis une phase de régulation au cours de laquelle la température T de l'enceinte 1 est régulée par rapport à ladite température de consigne T0 au moyen d'un dispositif thermostatique 7 connu en soi.

On se réfère maintenant aux figures 3A, 3B, 3C, 3D qui sont des courbes de puissance absorbée P en fonction du temps t.

Selon l'invention, le procédé de cuisson appliqué au four décrit est caractérisé en ce que pendant la phase de montée en température a, le dispositif de commande 2 alimente la résistance de convection 3 en continu à pleine puissance Pa (voir figure 3A). La résistance de gril 4 est alimentée selon un cycle marche-arrêt dont la période t1 est prédéterminée par le fabriquant (voir figure 3B). Ledit cycle présente, sur une période t1, un temps de marche t2 qui est sensiblement la moitié du temps d'arrêt t3, et de préférence choisi aux environs de 10 secondes. Ainsi, pendant une période t1 de 30 secondes, la résistance de gril 4 est alimentée avec une puissance absorbée maximale Pb de 1400 Watts pendant un temps de marche t2 de 10 secondes et est arrêtée pendant un temps d'arrêt t3 de 20 secondes (soit un temps d'arrêt t3 d'environ 66% de la période t1).

Pendant la phase de montée en température a, l'énergie micro-ondes est appliquée périodiquement pendant chaque temps d'arrêt t3 de la résistance de gril 4 pour une durée d'application t4 telle que, pour un temps de consigne t5 préalablement affiché par l'usager, ladite durée t4 est égale au temps le plus court des deux temps, soit de consigne t5 (figure 3C) , soit d'arrêt t3 de la résistance de gril 4 (figure 3D).

Ainsi, l'énergie micro-ondes n'étant appliquée que pendant les temps d'arrêt t3 de la résistance de gril 4, la puissance nominale n'est jamais dépassée. On a en effet, soit convection et micro-ondes avec la somme Pa + Pc des puissances maximales absorbée égale à 2.800 W, soit convection et gril avec la somme Pa + Pb des puissances maximales absorbées égale à 2900 W.

L'alimentation du gril 4 est toujours prioritaire sur l'énergie micro-ondes. En effet, si l'usager désire plus d'énergie micro-ondes que ne le permet la puissance disponible par rapport à la puissance nominale, alors l'énergie micro-ondes est automatiquement coupée par le dispositif de commande pour laisser le gril suivre son cycle normal.

Le fonctionnement pendant la phase de montée en température a est donc très simple.

L'usager affiche au départ une température de consigne T0 et un temps de consigne t5 pour l'énergie micro-ondes. Le temps de consigne t5 est traduit de façon automatique par un calculateur (non représenté) intégré au dispositif de commande 2 en un pourcentage de la période t1, ce pourcentage jouant ainsi, sur la puissance micro-ondes appliquée.

La cuisson commence alors. La résistance de convection 3 est alimentée en continue et la résistance de gril 4 suit son cycle marche-arrêt tandis que l'énergie micro-ondes est appliquée selon deux types de séquences en fonction du choix de l'usager.

Dans un premier type de séquence, si l'usager affiche un temps de consigne t5 inférieur au temps d'arrêt t3 de la résistance de gril 4 (voir la figure 3C où le temps de consigne t5 est, par exemple, choisi aux environs de 45% de la période t1), le temps d'application t4 de l'énergie micro-ondes est égal au temps de consigne t5.

Dans un deuxième type de séquence, si l'usager affiche un temps de consigne t5 supérieur au temps d'arrêt t3 de la résistance de gril 4 (voir la figure 3D où le temps de consigne t5 est, par exemple, choisi aux environs de 90% de la période t1), le temps d'application t4 de l'énergie micro-ondes sera le temps d'arrêt t3 de la résistance de gril 4.

Grâce à ces séquences d'application de la convection, du gril et de l'énergie micro-ondes, la phase de montée en température a est considérablement réduite. Ainsi pour une température de consigne T0 de 250°C et un temps de consigne t5 de 90%, la phase de montée en température a dure environ 10 minutes au lieu de 20 minutes dans un four n'utilisant pas un procédé conforme à l'invention.

Selon une autre caractéristique de l'invention, pendant la phase de régulation b, le dispositif de commande 2 coupe l'alimentation de la résistance de gril 4 et alimente la résistance de convection 3 par l'intermédiaire du dispositif thermostatique 7 tant que la température T de l'enceinte 1 est inférieure à la température de consigne T0, tandis que l'énergie micro-ondes est appliquée périodiquement pendant le temps de consigne t5, indépendamment de l'alimentation de la résistance de convection 3.

En effet, la résistance de gril étant coupée, il n'y a plus de risque de dépassement de la puissance nominale et l'énergie micro-ondes est appliquée en fonction du temps de consigne qu'affiche l'usager.

## Revendications

1. Procédé de cuisson pour un four à chauffage combiné par convection, gril et micro-ondes, comportant une enceinte de cuisson (1) et un dispositif de commande (2) alimentant, à partir d'une source d'énergie électrique de puissance nominale limitée, une résistance de convection (3), une résistance de gril (4) et un magnétron (5) pendant deux phases de cuisson (a,b), soit une phase de montée en température (a) au cours de laquelle la température (T) de l'enceinte (1) monte jusqu'à une température de consigne (T0) affichée par l'usager, puis une phase de régulation (b) au cours de laquelle la température (T) de l'enceinte (1) est régulée par rapport à ladite température de consigne (T0) au moyen d'un dispositif thermostatique (7), la somme des puissances absorbées respectivement par les deux résistances (3,4) et l'énergie micro-ondes étant inférieure à la puissance nominale de la source d'énergie,
**caractérisé en ce que,** pendant la phase de montée en température (a), le dispositif de commande (2) alimente la résistance de convection (3) en continu à pleine puissance et la résistance de gril (4) selon un cycle marche-arrêt dont la période (t1) est prédéterminée, tandis que l'énergie micro-ondes est appliquée périodiquement pendant chaque temps d'arrêt (t3) de la résistance de gril (4) pour une durée d'application (t4) telle que, pour un temps de consigne (t5) préalablement affiché par l'usager, ladite durée (t4) est égale au temps le plus court des deux temps, soit de consigne (t5), soit d'arrêt (t3) de la résistance de gril (4).

2. Procédé de cuisson selon la revendication 1,
**caractérisé en ce que,** pendant la phase de régulation (b), le dispositif de commande (2) coupe l'alimentation de la résistance de gril (4) et alimente la résistance de convection (3) par l'intermédiaire du dispositif thermostatique (7) tant que la température (T) de l'enceinte (1) est inférieure à la température de consigne (T0), tandis que l'énergie micro-ondes est appliquée périodiquement pendant le temps de consigne (t5), indépendamment de l'alimentation de la résistance de convection (3).

3. Procédé de cuisson selon la revendication 1 ou 2,
**caractérisé en ce que** les puissances maximales absorbées par l'énergie micro-ondes, la résistance de convection et la résistance de gril sont choisies respectivement aux environs de 1400, 1400 et 1500 watts.

4. Procédé de cuisson selon l'une quelconque des revendications précédentes,
**caractérisé en ce que,** pendant la phase de montée en température (a), le cycle de la résistance de gril présente, sur une période (t1), un temps de marche (t2) qui est sensiblement la moitié du temps d'arrêt (t3), et de préférence choisi aux environs de 10 secondes.

## Patentansprüche

1. Verfahren zum Garen für einen Ofen zur kombinierten Erwärmung durch Konvektion, einen Grill und Mikrowellen, der eine Ofenkammer (1) und eine Steuervorrichtung (2) umfaßt, welche ausgehend von einer elektrischen Energiequelle begrenzter nominaler Leistung einen Konvektionswiderstand (3), einen Grillwiderstand (4) und ein Magnetron (5) während zwei Phasen des Garens (a,b) speist, und zwar zum einen einer Temperaturanstiegsphase (a), während der die Temperatur (T) der Kammer (1) bis auf eine durch den Benutzer eingestellte Einstelltemperatur (T0) ansteigt, und einer Regelphase (b), während der die Temperatur (T) der Kammer (1) bezüglich der Einstelltemperatur (T0) mit Hilfe einer Thermostatvorrichtung (7) reguliert wird, wobei die Summe der jeweils durch die beiden Widerstände (3,4) aufgenommenen Leistungen und der Mikrowellenenergie niedriger ist als die nominale Leistung der Energiequelle, **dadurch gekennzeichnet, daß** die Steuervorrichtung (2) während der Temperaturanstiegsphase (a) den Konvektionswiderstand (3) kontinuierlich bei voller Leistung und den Grillwiderstand (4) gemäß einem Ein/Aus-Zyklus speist, dessen Periode (t1) vorbestimmt ist, wohingegen die Mikrowellenenergie während jeder Ausschaltzeit (t3) des Grillwiderstands (4) für eine Einschaltdauer (t4) periodisch eingeschaltet wird, die derart ist, daß für eine zuvor durch den Benutzer eingestellte Einstellzeit (t5) die Dauer (t4) gleich der kürzeren der beiden Zeiten ist, und zwar der Einstellzeit (t5) oder der Ausschaltzeit (t3) des Grillwiderstands (4).

2. Verfahren zum Garen nach Anspruch 1, **dadurch gekennzeichnet, daß** die Steuervorrichtung (2) während der Regelungsphase (b) die Versorgung des Grillwiderstands (4) abschaltet und den Konvektionswiderstand (3) durch die Thermostatvorrichtung (7) speist, solange die Temperatur (T) der Kammer (1) niedriger als die Einstelltemperatur (T0) ist, wohingegen die Mikrowellenenergie während der Einstellzeit (t5) unabhängig von der Versorgung des Konvektionswiderstands (3) periodisch eingeschaltet wird.

3. Verfahren zum Garen nach Anspruch 1 oder 2, **dadurch gekennzeichnet, daß** die maximalen Leistungen, die durch die Mikrowellen, den Konvektionswiderstand und den Grillwiderstand aufgenommen werden, jeweils in der Umgebung von 1400, 1400 und 1500 Watt ausgewählt werden.

4. Verfahren zum Garen nach einem der vorhergehenden Ansprüche, **dadurch gekennzeichnet, daß** der Zyklus des Grillwiderstands während der Temperaturanstiegsphase (a) über einer Periode (t1) eine Einschaltzeit (t2) aufweist, welche im wesentlichen die Hälfte der Ausschaltzeit (t3) ist und vorzugsweise in der Umgebung von 10 Sekunden ausgewählt wird.

## Claims

1. Cooking method for an oven with combined heating by convection, grill and microwaves, including a cooking chamber (1) and a control device (2) supplying, from an electrical energy source of limited nominal power, a convection resistance (3), a grill resistance (4) and a magnetron (5) during two cooking phases (a,b), that is to say a temperature-rise phase (a) during which the temperature (T) of the chamber (1) increases to a set temperature (T0) displayed by the user, and then a regulation phase (b) during which the temperature (T) of the chamber (1) is regulated with respect to the said set temperature (T0) by means of a thermostatic device (7), the sum of the powers absorbed respectively by the two resistances (3, 4) and the microwave energy being less than the nominal power of the energy source, characterised in that, during the temperature-rise phase (a), the control device (2) powers the convection resistance (3) continuously at full power and the grill resistance (4) in a stop/start cycle of a predetermined period (t1), whilst the microwave energy is applied periodically during each shut-off time (t3) of the grill resistance (4) for a duration of application (t4) such that, for a set time (t5) previously displayed by the user, the said duration (t4) is equal to the shorter of the two times, either the set time (t5) or the shut-off time (t3) of the grill resistance (4).

2. Cooking method according to Claim 1, characterised in that, during the regulation phase (b), the control device (2) cuts off the supply to the grill resistance (4) and powers the convection resistance (3) by means of the thermostatic device (7) as long as the temperature (T) of the chamber (1) is lower than the set temperature (T0), whilst the microwave energy is applied periodically during the set time (t5), independently of the powering of the convection resistance (3).

3. Cooking method according to Claim 1 or 2, characterised in that the maximum powers absorbed by the microwave energy, the convection resistance and the grill resistance are chosen so as to be respectively around 1400, 1400 and 1500 watts.

4. Cooking method according to any one of the preceding claims, characterised in that, during the temperature-rise phase (a), the grill resistance cycle has, over a period (t1), an operating time (t2) which is substantially one half the shut-off time (t3), and preferably chosen so as to be around 10 seconds.
